# EUROPÄISCHE PATENTSCHRIFT

(11) **EP 3 153 641 B1**
(45) Veröffentlichungstag und Bekanntmachung des Hinweises auf die Patenterteilung: **29.07.2020**
(21) Anmeldenummer: 16191310.8
(22) Anmeldetag: 21.05.2005
(51) Int. Cl.: E04F 15/02, B32B 13/04, B32B 19/04, E04C 2/26, E04C 2/04

(54) **FUSSBODENBELAG MIT EINEM KERN AUS MINERALISCHEN MATERIAL**
FLOOR COVERING WITH A CORE OF MINERAL MATERIAL
REVÊTEMENT DE SOL AVEC UN NOYAU DE MATÉRIEL MINÉRAL

(30) Priorität: 14.04.2005 DE 102005017392
(43) Veröffentlichungstag der Anmeldung: 12.04.2017
(62) Teilanmeldung aus: 05742879.9
(73) Patentinhaber: Scholz, Karl-Heinz Peter, 63768 Hösbach (DE)
(72) Erfinder: Scholz, Karl-Heinz Peter, 63768 Hösbach (DE)
(74) Vertreter: Schacht, Benny Marcel Corneel

(56) Entgegenhaltungen:
- EP-A- 1 085 138
- EP-A- 1 520 947
- DE-A1- 10 156 775
- DE-U1- 7 804 594
- DE-U1- 7 904 458
- DE-U1- 8 615 282
- US-A- 3 849 235
- US-A- 4 112 176
- US-A- 5 425 986
- US-A1- 2003 101 681
- US-A1- 2005 055 931

## Beschreibung

Die Erfindung betrifft einen Fußbodenbelag aus Fußbodenpaneelen mit einem plattenförmigen Kern und einer oberen Deckschicht, mit mechanischen Verriegelungsmitteln wenigstens an zwei einander gegenüberliegenden Kanten der Fußbodenpaneele.

Derartige Fußbodenpaneele sind in verschiedenen Ausführungsformen bekannt. Zum Stand der Technik kann beispielsweise auf die EP 843 763 B1 und die EP 698 162 B1 Bezug genommen werden.

Die EP 843 763 B1 beschreibt Fußbodenpaneele mit einem Kern, der auf Basis von Holz hergestellt worden ist. Als bevorzugt werden in der Druckschrift Holzwerkstoffe, insbesondere MDF und HDF genannt. Die EP 698 162 B1 offenbart ein Fußbodenpaneel, dessen Material als "kompaktes Laminat" bezeichnet wird. Als Möglichkeit für die Verbindung von zwei Paneelen wird ein Aluminiumprofil angegeben, das an jedem der Paneele befestigt werden kann und jeweils eine Verbindung zu einem angrenzenden Paneel gleicher Art ermöglicht. In jedem Fall soll die Verbindung so erfolgen, dass zwei zusammengefügte Fußbodenpaneele weder senkrecht zu ihrer Verbindungslinie auseinanderdriften noch entlang dieser Verbindungslinie verschoben werden können. Auch eine gegenseitige Bewegung in der Höhe ist ausgeschlossen.

Alle herkömmlichen Fußbodenpaneele der obigen Art, zu denen neben den Paneelen, die in den beiden genannten Druckschriften beschrieben werden, zahlreiche weitere Ausführungsformen gehören, bestehen aus Holzwerkstoffen, in den letzten Jahren überwiegend aus MDF oder HDF. Holzwerkstoffe sind brennbar. Die herkömmlichen Paneele gehören daher einer Bauteilklasse an, die ihre Verwendung in vielen Gebäuden, z. B. vielen öffentlichen Gebäuden ausschließt. Holzwerkstoffe haben in der Regel eine Reihe von weiteren Nachteilen. Sie sind zumeist nicht formaldehydfrei. Angesichts ihres relativ geringen Gewichtes sind sie hinsichtlich Luftschallschutz und Trittschallschutz ungünstig. Dies gilt trotz zahlreicher Versuche der Hersteller, die Schalleigenschaften durch untergelegte oder untergeklebte Dämmmatten zu verbessern.

Holzwerkstoffe sind im übrigen nur begrenzt resistent gegen Feuchtigkeit, da sie in der Regel dazu neigen, unter Feuchtigkeitseinfluss aufzuquellen und sich entsprechend zu verformen.

DE 101 56 775 A1 offenbart ein Bodenbelag gemäß das Oberbegriff von Anspruch 1.

Der Erfindung liegt die Aufgabe zugrunde, einen Fußbodenbelag aus Fußbodenpaneelen der eingangs genannten Art zu schaffen, der insbesondere hinsichtlich des Brandschutzes verbesserte Eigenschaften aufweist und daher in Anwendungsfällen einsetzbar ist, die den bisher verwendeten, aus Holzwerkstoffen bestehenden Paneelen verschlossen waren.

Zur Lösung dieser Aufgabe betrifft der Erfindung ein Fußbodenbelag gemäß Anspruch 1. Der erfindungsgemäße Fußbodenbelag ist u.a. dadurch gekennzeichnet, dass der Kern aus einem mineralischen Material besteht.

Ein mineralisches Material ist unbrennbar und eignet sich daher zur Lösung der gestellten Aufgabe. Das mineralische Material ist Zement, gegebenenfalls in Verbindung Füllstoffen oder Bindemitteln. In das mineralische Material wird ein ArmierungsMaterial eingemischt, das, vorzugsweise, einen Anteil von 5 bis 25%, bezogen auf das Volumen, aufweisen kann.

Das Armierungsmaterial kann aus Altpapier gewonnen werden, dessen Zellstofffasern als Armierungsmaterial ausreichen. Alternativ oder in Kombination können Textilfasern, Glasfasern, Kohlenstofffasern zur Armierung des mineralischen Materials verwendet werden,

Angesichts der Verwendung des mineralischen Materials für die Herstellung des Kerns beträgt dessen Dichte vorzugsweise mehr als 1,000 kg/m³.

Diese hohe Dichte wirkt sich vorteilhaft hinsichtlich des Trittschallschutzes aus, und auch der Luftschallschutz wird verbessert. Die Wärmeleitfähigkeit und auch die Fähigkeit zur Wärmespeicherung ist gegenüber Holzwerkstoffplatten verbessert, so dass die erfindungsgemäßen Paneele vorteilhaft in Verbindung mit Fußbodenheizungen eingesetzt werden können.

Für die Art der Verriegelungsmittel zwischen benachbarten Fußbodenpaneelen gibt es auf dem Markt zahlreiche geeignete Vorbilder, von denen viele auf den in den beiden oben genannten Druckschriften beschriebenen Lösungen basieren. Im Kern handelt es sich bei diesen Verriegelungsmitteln um Nut-Feder-Verbindungen, die so modifiziert sind, dass sie ein Auseinanderdriften oder ein sich Verschieben benachbarter Platten im obigen Sinn durch Formschluss ausschließen. Zumeist befindet sich an Nut und/oder Feder ein Vorsprung und am Gegenstück eine Ausnehmung, die ineinander greifen. Die Herstellung der Verbindung kann erfolgen durch Zusammenrasten im Sinn einer Klickverbindung oder, erfindungsgemäß, auch durch Einwinkeln der benachbarten Teile in Bezug aufeinander, wie es bereits in der GB 2 256 023 aus dem Jahre 1991 beschrieben wird. Eine Klickverbindung erfordert eine geringfügige Elastizität des Materials des Kerns, die bei den meisten in Betracht kommenden Kern Materialien ausreichend vorhanden ist. Dies gilt auch für das gemäß der vorliegenden Erfindung verwendete mineralische Material. Durch Einbettung geeigneter Füllstoffe kann die Elastizität des Materials erhöht werden.

Die Verriegelung kann derart erfolgen, dass benachbarte Paneele mit gewisser elastischer Vorspannung zusammengezogen werden. Dadurch wird eine dichte Verbindung zwischen den benachbarten Paneelen erreicht, die allerdings nicht flüssigkeitsdicht sein kann, so dass bei herkömmlichen Paneelen, die eine gewisse Feuchtigkeitsresistenz haben sollen, eine Kantenimprägnierung erforderlich ist oder sogar darüber hinausgehende Maßnahmen. Auf der anderen Seite kann es aber auch zweckmäßig sein, zwischen benachbarten Paneelen ein gewisses Spiel zuzulassen, wie es die eingangs genannte EP 698 162 B1 beschreibt.

Die Verriegelungsmittel sind im übrigen einstückig aus dem Kernmaterial gebildet, wie es die eingangs genannte EP 843 763 B1 vorgibt..

Auf dem Kern einer erfindungsgemäßen Platte befindet sich in fest integrierter Form die Deckschicht, die auch als Nutzschicht bezeichnet werden kann. Kern und Deckschicht bilden eine zusammenhängende, für den Gebrauch bzw. das Verlegen fertige Einheit, die keine Nachbehandlung erfordert.

Die Deckschicht kann aus einem üblichen Laminat aus Dekorschicht und widerstandsfähiger Schutzschicht bestehen. Die Dekorschicht kann ein Dekorpapier sein, das mit einem aminoplastischen Harz, etwa Melaminharz getränkt ist, in das beispielsweise zur zusätzlichen Befestigung und Sicherung gegen Verschleiß harte Partikel wie Aluminiumoxid-Partikel eingebettet werden können. Das Dekorpapier kann mit dem aminoplastischen Kunstharz getränkt sein, oder dieses kann als Folie aufgelegt werden. Zahlreiche Vorbilder sind aus dem Bereich der eingangs geschilderten herkömmlichen Laminatpaneele bekannt.

Für die Deckschicht kommen unterschiedliche Kunststoffmaterialien in Betracht, etwa Matten oder Auflagen aus Polyurethan oder Polyolefin. Auch Linoleum oder linoleumähnliche Materialien können verwendet werden. Das verwendete Material kann auf Rutschsicherheit ausgelegt sein. In jedem Fall bildet der plattenförmige Kern mit dieser als Nutzschicht verwendbaren Deckschicht eine Einheit, die als Einheit verlegt wird.

Die Deckschicht kann insbesondere so ausgelegt werden, dass sie schalldämpfend wirkt oder den Gehkomfort erhöht. Insoweit kommen Materialien aus Polyurethan oder auch Polyolefin in Betracht.

Auf der Rückseite des Kerns kann sich eine zusätzliche Dämmschicht zur Dämpfung von Körperschall oder Trittschall befinden. Alternativ können sich auf der Unterseite der den Kern bildenden Paneele Kanäle für die Aufnahme von Leitungen befinden. Heizungs- und/oder Kühlelemente können in den Kern eingebettet sein.

Die erfindungsgemäßen Fußbodenpaneele können Eigenschaften zur Ableitung elektrostatischer Aufladungen aufweisen. In Betracht kommt beispielsweise eine elektrisch leitende Schicht zwischen dem Kern und der Deckschicht. In den Kern selbst können elektrisch leitende Elemente eingebettet sein. Schließlich kann auch die Deckschicht elektrisch leitend ausgebildet sein.

Zwischen benachbarten Paneelen können durch geeignete Dimensionierung Fugen gebildet werden, in die ein Fugenband oder ein Fugenmaterial unter dekorativen Aspekten eingefügt werden kann. Die Fugen können jedoch auch verschiedene Aufgaben wahrnehmen. So können sie beispielsweise ein Material zur Absorption von Oberflächenfeuchtigkeit oder Oberflächenwasser enthalten. Das Fugenmaterial kann gegebenenfalls durch Quellung die Fuge dicht verschließen.

Alternativ kann das Fugenmaterial elektrostatische Aufladungen ableiten. beispielsweise in Richtung des Rohbodens oder auch gegen einen installierten Erdleiter.

Die Fugen können auch zur Aufnahme einer elastischen, plastischen oder aushärtenden Fugenmasse dienen. Weiterhin können die Fugen einen Spannungsausgleich in Bezug auf die sich bewegenden Gebäudemassen gestatten. In Betracht kommen hier mehrere kleine Mikrofugen mit 0,1 bis 0,5 mm Breite. Das Spiel, dass diese Mikrofugen ermöglichen, kann sich über eine größere Fläche zu Werten von beispielsweise 3 bis 6 mm addieren.

In die Fugen könnte auch ein Installationskanal integriert werden.

Fugenbänder können an einem der benachbarten Paneele befestigt sein oder auch in die Fuge eingelegt werden.

Im Folgenden werden bevorzugte Ausführungsbeispiele der Erfindung anhand der beigefügten Zeichnung näher erläutert.
Fig. 1 : ist ein senkrechter Teilschnitt durch ein erfindungsgemäßes Fußbodenpaneel;
Fig. 2 : veranschaulicht in einem senkrechten Teilschnitt einen speziellen Aspekt eines derartigen Paneels;
Fig. 3 : ist ein Teilschnitt zur Veranschaulichung der Gestaltung einer Fuge; und
Fig. 4 : veranschaulicht eine Ausführungsform mit dämpfender Unterlage.

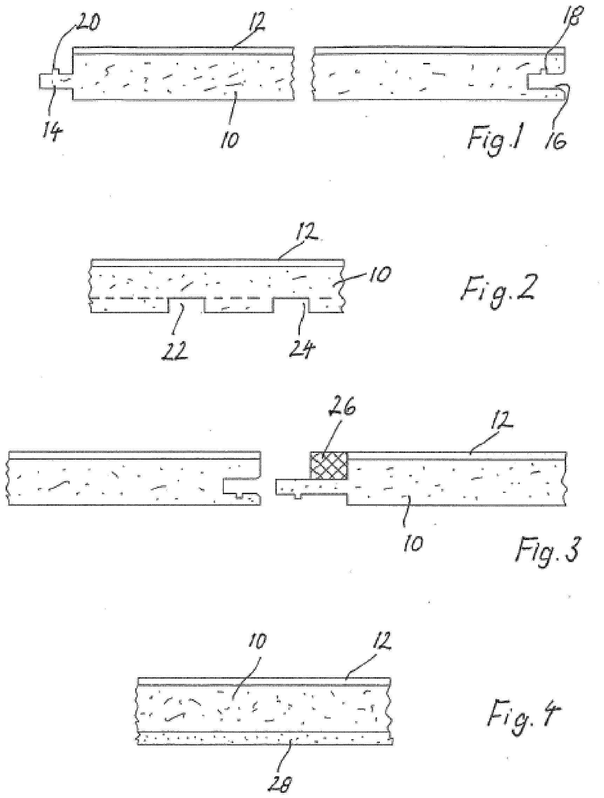

In Fig. 1 ist ein erfindungsgemäßes Fußbodenpaneel dargestellt. Es setzt sich zusammen aus einem Kern 10 in der Form einer Trägerplatte und einer auf diesen angebrachten Deckschicht 12, die zugleich Dekor- und Nutzschicht ist. Der Kern 10 besteht aus Zement, das unter hohem Druck kalt verpresst wird.

Ein zusätzliches Bindemittel kann zugesetzt sein. Das Material kann, erfindungsgemäß, auch eine Armierung erhalten, etwa eine Armierung aus Zellstofffasern, die aus Altpapier gewonnen sind.

Der Kern 10 besteht aus Zement. Die Trägerplatte gemäß Fig. 1 weist auf der linken Seite an der dortigen Kante eine vorspringende Feder 14 und auf der rechten Seite an der dortigen Kante eine Nut 16 auf. Nut und Feder verlaufen über die gesamte Länge der entsprechenden Kanten. Es ist davon auszugehen, dass Fig. 1 eine rechteckige oder quadratische Platte zeigt.

Es ist erkennbar, dass Nut und Feder 14, 16 insoweit modifiziert sind, als sich in der oberen Wange der Nut 16 eine Vertiefung 18 befindet, in die ein Vorsprung 20 auf der Oberseite der Feder 14 eintritt.

Die entsprechende Verrastung erfordert eine gewisse Elastizität der zusammenwirkenden Teile im Bereich von Nut und Feder. Bei Erfindungsgemäßen Verfahren, die im vorliegenden Zusammenhang auch als "Einwinkeln" bezeichnet werden, sind die Anforderungen an die Elastizität des Materials wesentlich geringer.

Das erfindungsgemäß verwendete Zement kann neben den Armierungsmaterialien auch sonstige Füllstoffe zur Verringerung des Gewichts, zur Erhöhung der Festigkeit, usw., enthalten.

Fig. 2 deutet einen Aspekt an, der bereits kurz angesprochen wurde. An der Unterseite des Kerns 10 können Kanäle 22, 24 ausgebildet sein, die in den Kern in der Form eines Kreuzrasters eingearbeitet sind und die Verlegung von Leitungen, insbesondere elektrische Leitungen, Heizungsleitungen, Druckluftleitungen, usw., gestatten.

Fig. 3 zeigt eine Ausführungsform, bei der zwischen zwei zusammengesetzten Fußbodenpaneelen eine Dichtleiste 26 vorgesehen ist. Die Dichtleiste 26 kann dekorativen oder funktionalen Zwecken dienen, wie zuvor angegeben wurde. Bei dem dargestellten Beispiel ist sie beispielsweise mit dem rechten der beiden Teile verbunden. Sie kann auch lose eingelegt werden.

Fig. 4 zeigt in einem weiteren senkrechten Schnitt eine Ausführungsform eines erfindungsgemäßen Fußbodenpaneels, das an der Unterseite des Kerns 10 eine Dämmschicht 28 aus einem Schaummaterial oder dergleichen aufweist, die zur weiteren Trittschalldämpfung und gegebenenfalls auch zur thermischen Dämpfung dient.

## Patentansprüche

1. Fußbodenbelag aus Fußbodenpaneelen mit einem plattenförmigen Kern (10) und einer oberen Deckschicht (12), mit mechanischen Verriegelungsmitteln (14, 16, 18, 20) wenigstens an zwei einander gegenüberliegenden Kanten der Fußbodenpaneele, wobei der Kern aus einem mineralischen Material besteht in denen ein Faser förmiges Armierungsmaterial eingebettet ist und dass die Verriegelungsmittel (14, 16, 18, 20) modifizierte Nut und Federverbindungen umfassen, die neben dem Eingriff von Nut (16) und Feder (14) eine formschlüssige Verbindung benachbarter Paneele in Richtung senkrecht zur Verbindungslinie sowie parallel zur Verbindungslinie benachbarter Platten gewährleisten und wobei die Verriegelungsmittel (14, 16, 18,20) einstückig aus dem Material des Kerns (10) ausgebildet sind, **dadurch gekennzeichnet dass** die Deckschicht (12) eine Kunststoffschicht ist, die sich in fest integrierter Form auf dem Kern (10) befindet, dass der Kern (10) aus Zement besteht und dass das Armierungsmaterial durch eingemischte Zellstofffasern, Textilfasern, Glasfasern und/oder Kohlenstofffasern gebildet ist, wobei die Verriegelungsmittel (14, 16, 18, 20) geeignet sind für eine Verrastung durch Einwinkeln der benachbarten Teile in Bezug aufeinander, wobei sich an Nut (16) und/oder Feder (14) ein Vorsprung (20) und am Gegenstück eine Ausnehmung (18) befindet, die ineinander greifen.

2. Fußbodenbelag nach Anspruch 1, **dadurch gekennzeichnet, dass** das Armierungsmaterial ein Volumenanteil von 5 bis 25% einnimmt.

3. Fußbodenbelag nach einem der Ansprüche 1 oder 2, **dadurch gekennzeichnet, dass** benachbarte Fußbodenpaneele durch die Verriegelungsmittel (14, 16, 18, 20) mit Vorspannung zusammengespannt sind.

4. Fußbodenbelag nach einem der Ansprüche 1 bis 3, **dadurch gekennzeichnet, dass** die Deckschicht (12) zugleich Dekorschicht und harte Nutzschicht ist.

5. Fußbodenbelag nach einem der vorhergehenden Ansprüche, **dadurch gekennzeichnet, dass** das Fußbodenpaneel rechteckig ist.

6. Fußbodenbelag nach Anspruch 5, **dadurch gekennzeichnet, dass** das Fußbodenpaneel an beiden einander gegenüberliegenden Kantenpaaren Verriegelungsmittel (14, 16, 18, 20) aufweist.

7. Fußbodenbelag nach einem der vorhergehenden Ansprüche, **dadurch gekennzeichnet, dass** das Fußbodenpaneel an der Unterseite des Kerns (10) eine Dämmschicht (28) aus einem Schaummaterial aufweist.

8. Fußbodenbelag nach einem der vorhergehenden Ansprüche, **dadurch gekennzeichnet, dass** das verwendete mineralische Material neben der Armierungsmaterialien Füllstoffe und/oder Bindemitteln enthält.

9. Fußbodenbelag nach einem der vorhergehenden Ansprüche, **dadurch gekennzeichnet, dass** der verwendete Kunststoff der Deckschicht (12) ein Elastomer ist.

10. Fußbodenbelag nach einem der Ansprüche 1 bis 8, **dadurch gekennzeichnet, dass** der verwendete Kunststoff der Deckschicht (12) aus Linoleum besteht.

11. Fußbodenbelag nach einem der Ansprüche 1 bis 8, **dadurch gekennzeichnet, dass** der verwendete Kunststoff der Deckschicht (12) aus PVC besteht.

12. Fußbodenbelag nach einem der Ansprüche 1 bis 8, **dadurch gekennzeichnet, dass** die Deckschicht (12) aus einem Polyurethan-Material besteht.

13. Fußbodenbelag nach einem der Ansprüche 1 bis 8, **dadurch gekennzeichnet, dass** die Deckschicht (12) aus einem Polyolefin enthaltenen Material besteht.

## Claims

1. Floor covering made up of floor panels with a plate-shaped core (10) and an upper cover layer (12), having mechanical locking means (14, 16, 18, 20) at least on two mutually opposite edges of the floor panels, wherein the core consists of a mineral material in which a fibrous reinforcing material is embedded and that the locking means (14, 16, 18, 20) comprise modified tongue and groove connections which, in addition to the engagement of groove (16) and tongue (14), ensure a form-fitting connection of adjacent panels in a direction perpendicular to the connection line and parallel to the connection line of adjacent panels, and wherein the locking means (14, 16, 18, 20) are formed integrally from the material of the core (10), **characterized in that** the cover layer (12) is a plastic layer which is situated in fixedly integrated form on the core (10), **in that** the core (10) consists of cement, and **in that** the reinforcing material is formed by mixed-in cellulose fibres, textile fibres, glass fibres and/or carbon fibres, wherein the locking means (14, 16, 18, 20) are suitable for latching engagement by angling in the adjacent parts with respect to one another, wherein a projection (20) is situated on the groove (16) and/or tongue (14), and a recess (18) is situated on the mating piece, said projection and recess inter-engaging.

2. Floor covering according to Claim 1, **characterized in that** the reinforcing material occupies a volume fraction of 5 to 25%.

3. Floor covering according to either of Claims 1 and 2, **characterized in that** adjacent floor panels are clamped together by the locking means (14, 16, 18, 20) with prestressing.

4. Floor covering according to one of Claims 1 to 3, **characterized in that** the cover layer (12) is at the same time a decorative layer and hard useful layer.

5. Floor covering according to one of the preceding claims, **characterized in that** the floor panel is rectangular.

6. Floor covering according to Claim 5, **characterized in that** the floor panel has locking means (14, 16, 18, 20) on both mutually opposite edge pairs.

7. Floor covering according to one of the preceding claims, **characterized in that** the floor panel has, on the underside of the core (10), an insulating layer (28) composed of a foam material.

8. Floor covering according to one of the preceding claims, **characterized in that**, in addition to the reinforcing materials, the mineral material used contains fillers and/or binders.

9. Floor covering according to one of the preceding claims, **characterized in that** the plastic of the cover layer (12) that is used is an elastomer.

10. Floor covering according to one of Claims 1 to 8, **characterized in that** the plastic of the cover layer (12) that is used consists of linoleum.

11. Floor covering according to one of Claims 1 to 8, **characterized in that** the plastic of the cover layer (12) that is used consists of PVC.

12. Floor covering according to one of Claims 1 to 8, **characterized in that** the cover layer (12) consists of a polyurethane material.

13. Floor covering according to one of Claims 1 to 8, **characterized in that** the cover layer (12) consists of a polyolefin-containing material.

## Revendications

1. Revêtement de sol constitué de panneaux de sol comprenant une partie centrale en forme de plaque (10) et une couche supérieure de recouvrement (12), comprenant des moyens de verrouillage mécaniques (14, 16, 18, 20) au moins à deux bords opposés l'un à l'autre des panneaux de sol, la partie centrale étant constituée d'une matière minérale dans laquelle une matière fibreuse faisant office d'armature est incorporée et que les moyens de verrouillage (14, 16, 18, 20) comprennent des liaisons du type à rainures et à languettes modifiées qui, outre l'entrée en prise de rainures (16) et de languettes (14), assurent une liaison par complémentarité de forme de panneaux voisins dans une direction perpendiculaire à la ligne de liaison, ainsi que de panneaux voisins parallèlement à la ligne de liaison, et les moyens de verrouillage (14, 16, 18, 20) étant réalisés en une seule pièce à partir de la matière de la partie centrale (10), **caractérisé en ce que** la couche de recouvrement (12) est une couche de matière synthétique, qui se trouve sur la partie centrale (10) sous une forme intégrée de manière fixe, **en ce que** la partie centrale (10) est constituée de ciment et **en ce que** la matière faisant office d'armature est formée par des fibres de cellulose, des fibres de textiles, des fibres de verre et/ou des fibres de carbone mélangées, les moyens de verrouillage (14, 16, 18, 20) étant appropriés pour une jonction par encliquetage par emboîtement des pièces adjacentes les unes par rapport aux autres, un appendice en saillie (20) se trouvant au niveau de la rainure (16) et/ou de la languette (14), ainsi qu'une cavité (18) au niveau de la pièce complémentaire, qui vient se mettre en prise par emboîtement.

2. Revêtement de sol selon la revendication 1, **caractérisé en ce que** la matière faisant office d'armature occupe une proportion volumique de 5 à 25 %.

3. Revêtement de sol selon l'une quelconque des revendications 1 ou 2, **caractérisé en ce que** des panneaux de sol voisins sont serrés l'un contre l'autre via les moyens de verrouillage (14, 16, 18, 20), avec une précontrainte.

4. Revêtement de sol selon l'une quelconque des revendications 1 à 3, **caractérisé en ce que** la couche de recouvrement (12) est de manière simultanée une couche décorative et une couche d'usure dure.

5. Revêtement de sol selon l'une quelconque des revendications précédentes, **caractérisé en ce que** le panneau de sol est rectangulaire.

6. Revêtement de sol selon la revendication 5, **caractérisé en ce que** le panneau de sol présente des moyens de verrouillage (14, 16, 18, 20) à deux paires de bords opposées l'une à l'autre.

7. Revêtement de sol selon l'une quelconque des revendications précédentes, **caractérisé en ce que** le panneau de sol présente, au niveau de la face inférieure de la partie centrale (10), une couche d'isolation (28) constituée d'une matière en mousse.

8. Revêtement de sol selon l'une quelconque des revendications précédentes, **caractérisé en ce qu'**outre les matières faisant office d'armature, la matière minérale utilisée contient des matières de remplissage et/ou des liants.

9. Revêtement de sol selon l'une quelconque des revendications précédentes, **caractérisé en ce que** la matière synthétique que l'on utilise pour la couche de recouvrement (12) est un élastomère.

10. Revêtement de sol selon l'une quelconque des revendications 1 à 8, **caractérisé en ce que** la matière synthétique que l'on utilise pour la couche de recouvrement (12) est constituée de linoléum.

11. Revêtement de sol selon l'une quelconque des revendications 1 à 8, **caractérisé en ce que** la matière synthétique que l'on utilise pour la couche de recouvrement (12) est constituée de PVC.

12. Revêtement de sol selon l'une quelconque des revendications 1 à 8, **caractérisé en ce que** la couche de recouvrement (12) est constituée d'une matière à base de polyuréthane.

13. Revêtement de sol selon l'une quelconque des revendications 1 à 8, **caractérisé en ce que** la couche de recouvrement (12) est constituée d'une matière contenant une polyoléfine.
